# FASCICULE DE BREVET EUROPEEN

(11) **EP 1 924 497 B1**
(45) Date de publication et mention de la délivrance du brevet: **08.07.2009**
(21) Numéro de dépôt: 06808108.2
(22) Date de dépôt: 12.09.2006
(51) Int. Cl.: B64D 31/10, G05D 1/00

(54) **DISPOSITIF DE PROTECTION D'ÉNERGIE POUR UN AVION**
ENERGIESCHUTZVORRICHTUNG FÜR EIN FLUGZEUG
ENERGY PROTECTING DEVICE FOR AIRCRAFT

(30) Priorité: 13.09.2005 FR 0509324
(43) Date de publication de la demande: 28.05.2008
(73) Titulaire: AIRBUS France, 31060 Toulouse (FR)
(72) Inventeur: DELAPLACE, Franck, F-31300 Toulouse (FR); RONCERAY, Didier, F-31820 Pibrac (FR); MULLER, Jean, F-31170 Tournefeuille (FR)
(74) Mandataire: Hauer, Bernard
(86) Numéro de dépôt international: PCT/FR2006/002082
(87) Numéro de publication internationale: WO 2007/031634

(56) Documents cités:
- FR-A- 2 308 975
- FR-A- 2 753 171
- FR-A- 2 860 081
- US-A- 4 884 205

## Description

La présente invention concerne un dispositif de protection d'énergie pour un avion, notamment un avion quadrimoteur.

Plus précisément, ledit dispositif est destiné à protéger l'avion contre des situations de basse énergie (faible vitesse, haute incidence, faible poussée moteur) qui peuvent mettre en péril la sécurité de l'avion, notamment près du sol.

Généralement, un tel dispositif comporte, de façon usuelle :
- des moyens de commande déclenchables, pour activer, lorsqu'ils sont déclenchés, une fonction de protection consistant à commander automatiquement lesdits moteurs afin qu'ils fournissent chacun une poussée maximale ; et
- des moyens de déclenchement pour surveiller automatiquement une pluralité de paramètres et pour déclencher automatiquement lesdits moyens de commande lorsque des conditions de déclenchement dépendant desdits paramètres sont réalisées.

Toutefois, en raison de la génération d'une poussée maximale sur chacun des moteurs de l'avion lors de l'activation de la fonction de protection, il apparaît un problème en cas de panne de l'un de ces moteurs. En effet, dans ce cas, la fonction de protection précitée entraîne une dissymétrie de poussée, c'est-à-dire que la poussée engendrée d'un côté (sous une aile) de l'avion est beaucoup plus importante que celle engendrée de l'autre côté (sous l'autre aile). Ceci entraîne un mouvement de lacet puis de roulis important qui peut conduire à un contrôle latéral difficile, et donc engendrer un problème de sécurité important, pour l'avion.

Aussi, pour éviter une telle situation, un dispositif de protection du type précité, comporte généralement de plus :
- des moyens de détection pour détecter toutes les pannes desdits moteurs ; et
- des moyens d'inhibition qui sont reliés auxdits moyens de détection et qui sont susceptibles d'inhiber lesdits moyens de déclenchement et donc de désactiver la fonction de protection précitée.

De façon usuelle, lesdits moyens d'inhibition sont formés de manière à inhiber les moyens de déclenchement dès que l'un des moteurs est détecté en panne par lesdits moyens de détection, ce qui permet d'éviter les problèmes précités.

Toutefois, une telle solution réduit fortement la disponibilité du dispositif de protection de sorte que, dès qu'au moins un moteur est en panne, l'avion ne dispose plus de protection d'énergie.

La présente invention a pour objet de remédier à ces inconvénients. Elle concerne un dispositif de protection d'énergie pour un avion qui est muni d'au moins un moteur agencé sur chacune de ses ailes et d'au moins un moteur supplémentaire, dispositif qui présente un domaine d'utilisation étendu, dans lequel la sécurité de l'avion est préservée.

A cet effet, selon l'invention, ledit dispositif du type comportant :
- des moyens de détection pour détecter les pannes desdits moteurs ;
- des moyens de commande déclenchables, pour activer, lorsqu'ils sont déclenchés, une fonction de protection consistant à commander automatiquement lesdits moteurs pour qu'ils fournissent une poussée maximale ;
- des moyens de déclenchement pour surveiller automatiquement une pluralité de paramètres et pour déclencher automatiquement lesdits moyens de commande lorsque des conditions de déclenchement dépendant desdits paramètres surveillés sont réalisées ; et
- des moyens d'inhibition reliés auxdits moyens de détection et susceptibles d'agir sur lesdits moyens de déclenchement, de manière à inhiber l'activation de ladite fonction de protection,
est remarquable en ce que :
- lesdits moyens d'inhibition sont formés de manière à inhiber l'activation de ladite fonction de protection, uniquement lorsque tous les moteurs qui sont agencés sur une même aile de l'avion sont simultanément en panne ; et
- lesdits moyens de commande sont formés de sorte que, lorsqu'ils sont déclenchés, ils commandent, en fonction du nombre et de la position des moteurs éventuellement en panne, au moins certains des moteurs non en panne, de manière à minimiser une éventuelle dissymétrie de poussée par rapport au fuselage de l'avion.

Dans un mode de réalisation préféré, le dispositif conforme à l'invention est appliqué à un avion qui est muni de quatre moteurs agencés par paires sur ses ailes. Dans ce cas, lesdits moyens d'inhibition sont donc formés de manière à inhiber l'activation de ladite fonction de protection, uniquement lorsque deux moteurs qui sont agencés sur une même aile de l'avion sont simultanément en panne.

Ainsi, grâce à l'invention, la fonction de protection d'énergie est inhibée uniquement si deux moteurs situés sur une même aile sont simultanément en panne, une telle situation rendant alors critique pour le contrôle latéral de l'avion la dissymétrie créée, ce qui permet de réduire considérablement le nombre de cas d'inhibition de cette fonction de protection. Par conséquent, le dispositif de protection conforme à l'invention présente un domaine d'utilisation beaucoup plus étendu qu'un dispositif usuel du type précité, en particulier en cas de panne d'un seul moteur ou en cas de panne de deux moteurs qui sont agencés sur des ailes différentes.

De plus, grâce à l'invention, les moyens de commande sont formés de manière à minimiser une éventuelle dissymétrie de poussée (par rapport au fuselage de l'avion), comme précisé ci-dessous. Par conséquent, une activation de la fonction de protection ne perturbe pas le contrôle latéral de l'avion.

Les caractéristiques précitées permettent donc d'augmenter la sécurité de l'avion, à la fois de façon générale et par rapport à un dispositif de protection d'énergie usuel du type précité.

Dans un mode de réalisation préféré, lesdits moyens de commande sont formés de manière à commander (pour obtenir une puissance maximale), lorsqu'ils sont déclenchés :
- lorsqu'aucun moteur n'est en panne, tous les quatre moteurs ;
- lorsqu'un moteur externe est en panne, uniquement les deux moteurs internes de part et d'autre du fuselage ;
- lorsqu'un moteur interne est en panne, uniquement les deux moteurs externes de part et d'autre du fuselage ;
- lorsque les deux moteurs externes sont en panne, les deux moteurs internes de part et d'autre du fuselage ;
- lorsque les deux moteurs internes sont en panne, les deux moteurs externes de part et d'autre du fuselage ; et
- lorsque le moteur interne d'une première aile et le moteur externe de la seconde aile sont en panne, les deux moteurs non en panne.

Le dispositif conforme à la présente invention peut également être appliqué à un avion trimoteur qui est muni d'un moteur agencé sur chacune de ses ailes et d'un moteur supplémentaire agencé sur le fuselage. Dans ce cas, avantageusement, lesdits moyens d'inhibition sont formés de manière à inhiber l'activation de ladite fonction de protection, uniquement lorsqu'au moins l'un des moteurs qui sont agencés sur les ailes est en panne.

En outre, avantageusement, lesdits moyens de déclenchement sont associés à une pluralité de capteurs destinés à mesurer au moins certains des paramètres suivants : l'incidence de l'avion, l'assiette longitudinale de l'avion, la vitesse de tangage de l'avion, la vitesse de l'avion ainsi que son taux de décélération, le nombre de Mach de l'avion, la position de becs et de volets de l'avion, la hauteur radio-altitude de l'avion (hauteur par rapport au sol), la position d'un mini-manche, et des paramètres moteur (régime moteur) permettant de détecter une panne moteur.

Les moyens de détection précités et les capteurs précédents peuvent faire partie d'une seule et même unité de détection.

Dans un mode de réalisation préféré, lesdits moyens de déclenchement prennent en compte, comme conditions de déclenchement :
- des premières conditions relatives à un besoin de déclenchement ; et
- des secondes conditions relatives à une autorisation de déclenchement, qui doivent être simultanément vérifiées pour engendrer le déclenchement.

Dans ce cas, avantageusement, lesdites premières conditions sont vérifiées, si au moins l'une des situations suivantes est vérifiée :
- l'incidence de l'avion est supérieure ou égale à une première valeur d'incidence et une condition d'énergie basse est active depuis une durée prédéterminée ;
- l'incidence de l'avion est supérieure ou égale à une seconde valeur d'incidence prédéterminée ;
- un moyen de protection d'incidence est engagé et un manche de commande de l'avion est dans une position proche de la butée à cabrer ;
- l'assiette de l'avion est supérieure à une valeur d'assiette prédéterminée et le manche de commande est dans une position proche de la butée à cabrer.

En outre, de façon avantageuse, lesdites secondes conditions sont vérifiées si l'ensemble des situations suivantes sont vérifiées simultanément :
- la hauteur de l'avion par rapport au sol est supérieure à une valeur de hauteur prédéterminée lors de l'atterrissage ;
- le nombre de Mach de l'avion est inférieur à une valeur prédéterminée de nombre de Mach ; et
- une pluralité de systèmes particuliers de l'avion, tels qu'une unité de référence de données air de type ADR ("Air Data Référence" en anglais), un système de référence inertielle de type IRS ("Inertial Reference System" en anglais), un radioaltimètre, un moyen de détermination de la vitesse air, et un moyen de détermination de l'angle d'incidence, sont valides.

Par ailleurs, le dispositif de protection d'énergie conforme à l'invention comporte, de plus, au moins un moyen qui est susceptible d'être actionné par un opérateur et qui est formé de manière à désactiver ladite fonction de protection lorsqu'il est actionné. Ce moyen peut notamment être un bouton-poussoir, un moyen de commande associé à un écran, ou un levier de commande de poussée qui peut par exemple être amené au ralenti.

En outre, avantageusement, lesdits moyens de commande sont formés de manière à commander, lorsque la fonction de protection est activée, au moins certains des moteurs non en panne de sorte que ces derniers fournissent chacun une poussée maximale pour un décollage (niveau de poussée appelé "Max Take-Off" en anglais) ou une remise des gaz (niveau de poussée appelé "Go-Around" en anglais).

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

Les figures 2 à 9 illustrent schématiquement un avion, sur lequel sont mis en évidence, le cas échéant, les moteurs en panne, les moteurs dont la poussée n'est pas modifiée, et les moteurs dont la poussée est modifiée conformément à la présente invention.

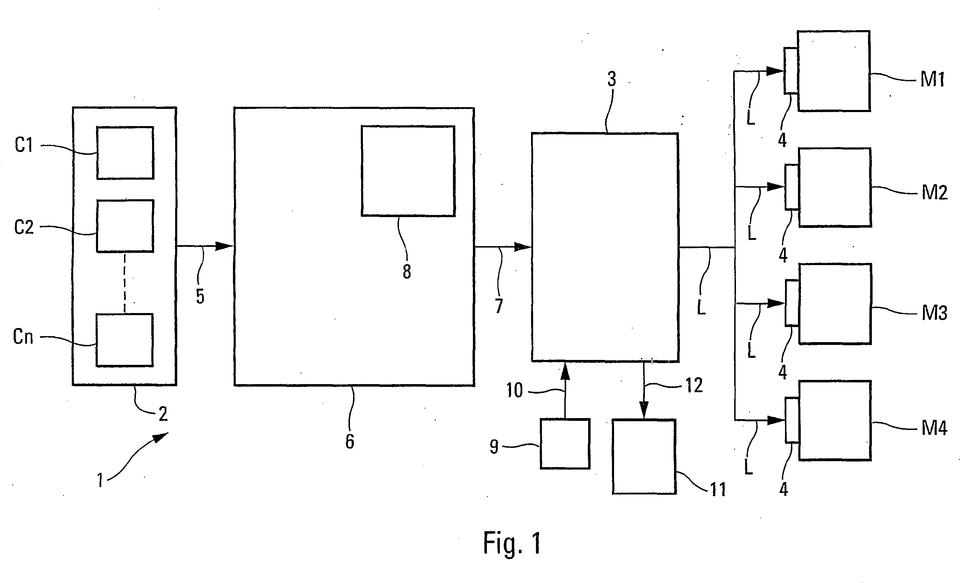

Le dispositif 1 conforme à l'invention et représenté schématiquement sur la figure 1 est un dispositif de protection d'énergie pour un avion A muni de quatre moteurs M1, M2, M3 et M4. Plus précisément, le dispositif 1 est destiné à protéger l'avion A contre des situations de basse énergie (faible vitesse, haute incidence, faible poussée moteur) qui peuvent mettre en péril la sécurité de l'avion A, notamment près du sol.

Pour ce faire, ledit dispositif 1 est du type usuel comportant :
- des moyens de détection faisant partie par exemple d'une unité de détection 2, pour détecter toutes les pannes desdits moteurs M1, M2, M3etM4;
- des moyens de commande 3 qui sont déclenchables et qui sont formés de manière à activer une fonction de protection lorsqu'ils sont déclenchés. Cette fonction de protection consiste à commander automatiquement lesdits moteurs M1, M2, M3 et M4 de manière à modifier la poussée délivrée afin qu'ils fournissent chacun une poussée maximale. Pour ce faire, lesdits moyens de commande 3 sont reliés par l'intermédiaire de liaisons L à des moyens usuels 4 destinés à modifier la poussée- exercée par lesdits moteurs M1, M2, M3 et M4, notamment en modifiant l'alimentation en carburant desdits moteurs ;
- des moyens de déclenchement 6 qui sont reliés par l'intermédiaire de liaisons 5 et 7 respectivement à ladite unité de détection 2 et auxdits moyens de commande 3 et qui sont formés de manière à surveiller automatiquement une pluralité de paramètres particuliers (précisés ci-après) et à déclencher automatiquement lesdits moyens de commande 3 lorsque des conditions de déclenchement (précisées ci-dessous) dépendant desdits paramètres sont réalisées ; et
- des moyens d'inhibition 8 qui sont liés auxdits moyens de déclenchement 6, par exemple en étant intégrés dans ces derniers, et qui sont formés de manière à agir sur lesdits moyens de déclenchement 6 de manière à inhiber l'activation de ladite fonction de protection.

Bien entendu, si la fonction de protection n'est pas activée ou si son activation a été inhibée, les différents moteurs M1 à M4 de l'avion A sont commandés de façon usuelle suivant des ordres usuels engendrés notamment par le pilote de l'avion A.

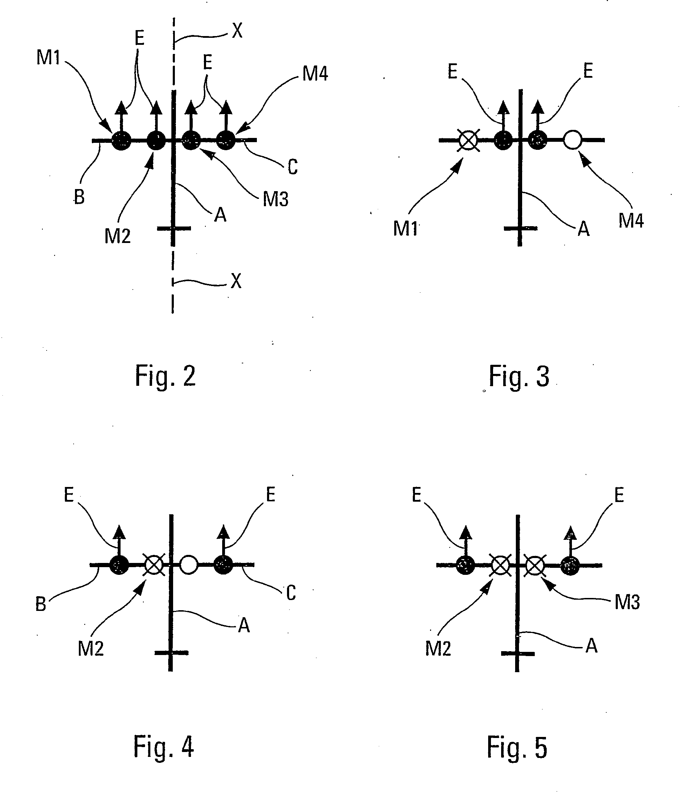

Selon l'invention, notamment pour augmenter le domaine d'utilisation du dispositif 1, tout en préservant la sécurité de l'avion A :
- lesdits moyens d'inhibition 8 sont formés de manière à inhiber l'activation de ladite fonction de protection (c'est-à-dire à empêcher ou à arrêter la mise en oeuvre de cette fonction), uniquement lorsque deux moteurs qui sont agencés sur une même aile B ou C de l'avion A sont simultanément en panne ; et
- lesdits moyens de commande 3 sont formés de sorte que, lorsqu'ils sont déclenchés par lesdits moyens de déclenchement 6, ils commandent, en fonction du nombre et de la position sur les ailes B et C des moteurs qui sont éventuellement en panne, au moins certains des moteurs qui ne sont alors pas en panne, de manière à simultanément :
   ■ obtenir une poussée maximale ; et
   ■ minimiser une éventuelle dissymétrie de poussée par rapport au fuselage de l'avion A, illustré par un axe X-X sur la figure 2.

Ainsi, grâce à l'invention, la fonction de protection est inhibée uniquement si deux moteurs situés sur une même aile B ou C de l'avion A sont simultanément en panne, une telle situation rendant impossible la réduction d'une éventuelle dissymétrie de poussée. La caractéristique précédente permet de réduire considérablement le nombre de cas d'inhibition de cette fonction de protection. Par conséquent, le dispositif de protection 1 conforme à l'invention présente un domaine d'utilisation beaucoup plus étendu qu'un dispositif usuel. Il est, en particulier, actif en cas de panne d'un seul moteur ou en cas de panne de deux moteurs qui sont agencés sur des ailes différentes de l'avion A.

De plus, grâce à l'invention, les moyens de commande 3 sont formés de manière à minimiser une éventuelle dissymétrie de poussée [par rapport au fuselage (X-X) de l'avion A], comme précisé ci-dessous. Par conséquent, une activation de la fonction de protection ne perturbe pas le contrôle latéral de l'avion A.

Les caractéristiques précitées permettent donc d'augmenter la sécurité de l'avion A, à la fois de façon générale et par rapport à un dispositif de protection d'énergie usuel.

Dans un mode de réalisation particulier, ladite unité de détection 2 comporte une pluralité de capteurs C1, C2, ..., Cn pour mesurer respectivement au moins certains des paramètres suivants (qui sont surveillés par les moyens de déclenchement 6) : l'incidence de l'avion A, l'assiette longitudinale de l'avion A, la vitesse de tangage de l'avion A, la vitesse de l'avion A ainsi que son taux de décélération, le nombre de Mach de l'avion A, la position de becs et de volets de l'avion A, la hauteur radio-altitude de l'avion A (hauteur par rapport au sol), la position d'un mini-manche, et des paramètres moteur (régime moteur) permettant de détecter une panne moteur.

En outre, lesdits moyens de déclenchement 6 prennent en compte, comme conditions de déclenchement :
- des premières conditions relatives à un besoin de déclenchement de la fonction de protection, qui sont basées sur des paramètres illustrant les actions du pilote et la situation de l'avion A ; et
- des secondes conditions relatives à une autorisation de déclenchement de la fonction de protection, qui sont basées sur des paramètres de l'avion A et de systèmes dudit avion A.

Ces premières et secondes conditions doivent être vérifiées simultanément pour engendrer le déclenchement des moyens de commande 3.

Dans un mode de réalisation particulier, lesdites premières conditions sont vérifiées, si au moins l'une des situations A/, B/, C/ et D/ suivantes est vérifiée :
A/ l'incidence de l'avion A est supérieure ou égale à une première valeur d'incidence et une condition d'énergie basse est active depuis une durée prédéterminée ;
B/ l'incidence de l'avion A est supérieure ou égale à une seconde valeur d'incidence prédéterminée ;
C/ un moyen de protection d'incidence est engagé et le manche de commande est dans une position proche de la butée à cabrer ;
D/ l'assiette de l'avion A est supérieure à une valeur d'assiette prédéterminée et le manche de commande est dans une position proche de la butée à cabrer.

Concernant la situation A/ précitée, on notera que :
- l'incidence de l'avion A correspond à la somme d'une incidence avion αavion et d'une valeur dynamique αd. Cette valeur dynamique αd est un terme d'avance de phase qui tient compte de la décélération de l'avion A, de conditions de fort vent ou de la vitesse de tangage de l'avion A, et anticipe ainsi une augmentation à court terme de l'angle d'incidence ;
- ladite première valeur d'incidence est déterminée en tant que compromis entre des contraintes de manoeuvrabilité de l'avion A et l'efficacité de la fonction de protection. Cette première valeur d'incidence dépend par exemple des positions des becs et volets de l'avion A et du nombre de Mach ;
- ladite durée prédéterminée représente un retard qui permet au pilote d'avoir suffisamment de temps pour réagir (à partir d'une première détection d'une condition d'énergie basse qui peut être par exemple uniquement sonore sans effet sur le régime des moteurs) avant le déclenchement de la fonction de protection, qui peut être considérée par le pilote de façon négative, puisqu'elle entraîne souvent une remise des gaz.

Concernant la situation B/, ladite seconde valeur d'incidence correspond à une incidence jugée maximale, donnant encore une marge acceptable par rapport à l'incidence de décrochage de l'avion A. Cette seconde valeur d'incidence est supérieure à ladite première valeur d'incidence et peut être déterminée, par exemple, en fonction de la position des becs et des volets ainsi que du nombre de Mach de l'avion A.

En outre, lesdites secondes conditions sont vérifiées, si l'ensemble des situations E/, F/ et G/ suivantes sont vérifiées simultanément :
E/ la hauteur de l'avion A par rapport au sol est supérieure à une valeur de hauteur prédéterminée, lors de l'atterrissage ;
F/ le nombre de Mach de l'avion A est inférieur à une valeur prédéterminée de nombre de Mach ; et
G/ une pluralité de systèmes particuliers, tels qu'une unité de référence de données air de type ADR ("Air Data Reference" en anglais), un système de référence inertielle de type IRS ("Inertial Reference System" en anglais), un radioaltimètre, un moyen de détermination de la vitesse air, et un moyen de détermination de l'angle d'incidence, de l'avion A sont valides.

On notera qu'en raison de la condition relative à la situation E/ précitée, la fonction de protection est inhibée au sol, et même lors de l'atterrissage, si l'avion A est situé trop près du sol.

Par ailleurs, le dispositif 1 conforme à l'invention comporte, de plus, au moins un moyen 9 qui est relié par exemple par l'intermédiaire d'une liaison 10 auxdits moyens de commande 3 (ou auxdits moyens de déclenchement 6), qui est susceptible d'être actionné par un opérateur, et qui est formé de manière à désactiver ladite fonction de protection lorsqu'il est actionné. Ainsi, le pilote est susceptible à tout moment de désactiver ladite fonction de protection. A titre d'illustration, ledit moyen 9 peut être :
- un bouton-poussoir ;
- un moyen de commande qui est associé à un écran, par exemple un écran de type FCU ("Flight Control Unit" en anglais, à savoir unité de commande de vol) ;
- un levier de commande de poussée, qui peut par exemple être amené au ralenti pour désactiver la fonction de protection.

Ledit dispositif 1 peut également comporter un moyen d'affichage 11 qui est relié par l'intermédiaire d'une liaison 12 auxdits moyens de commande 3 et qui est susceptible d'afficher un message prévenant un pilote de l'avion A de toute activation de la fonction de protection, par exemple en affichant un message approprié sur un écran, tel qu'un écran primaire de vol de type PFD ("Primary Flight Display" en anglais) par exemple.

En outre, lesdits moyens de commande 3 sont formés de manière à commander, lorsque la fonction de protection est activée, au moins certains des moteurs non en panne de l'avion A de sorte que ces derniers fournissent chacun une poussée maximale usuelle pour un décollage ou une remise des gaz.

Comme indiqué précédemment, la fonction de protection est déclenchée chaque fois que les conditions appropriées précitées sont réalisées. De plus, cette fonction de protection est inhibée uniquement si deux moteurs qui sont situés sur une même aile B ou C de l'avion A sont simultanément en panne.

Sur les figures 2 à 9, on présente schématiquement différentes situations possibles qui montrent à chaque fois l'avion A muni d'ailes B et C. Chaque aile B, C comporte un moteur externe M1, M4 par rapport au fuselage (X-X) de l'avion A et un moteur interne M2, M3 par rapport audit fuselage. Sur ces figures 2 à 9, lesdits moteurs M1, M4 sont représentés sous forme :
- d'un cercle muni d'une croix, lorsque le moteur correspondant est en panne, comme représenté par exemple pour le moteur M1 sur la figure 3;
- d'un rond noirci, lorsque le moteur correspondant est commandé à la puissance maximale conformément à la présente invention. Une telle commande est mise en évidence par l'intermédiaire de flèches E qui illustrent la poussée (ou la traction) correspondante, comme représenté par exemple pour les moteurs M2 et M3 sur la figure 3 ; et
- d'un simple cercle non noirci, lorsque le moteur correspondant n'est pas en panne, mais n'est pas commandé conformément à l'invention de sorte qu'il continue à générer une puissance qui est représentative d'ordres usuels, comme représenté par exemple pour le moteur M4 sur la figure 3.

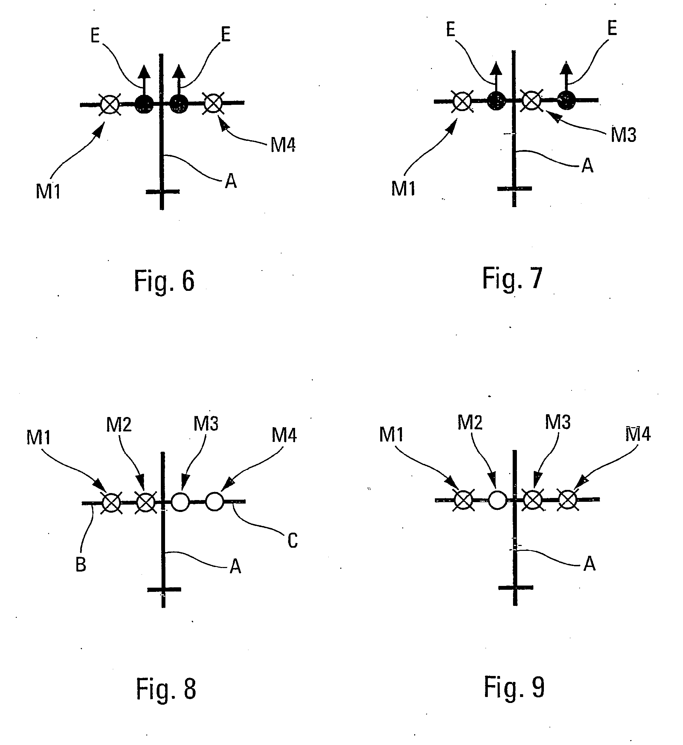

Selon l'invention, lesdits moyens de commande 3 sont formés de manière à commander, pour obtenir une puissance maximale, lorsqu'ils sont déclenchés :
- lorsqu'aucun moteur n'est en panne, tous les quatre moteurs M1 à M4, comme représenté sur la figure 2 ;
- lorsqu'un moteur externe M1 est en panne, uniquement les deux moteurs internes M2 et M3 de part et d'autre du fuselage (X-X) de l'avion A, comme représenté sur la figure 3 ;
- lorsqu'un moteur interne M2 est en panne, uniquement les deux moteurs externes M1 et M4 de part et d'autre du fuselage, comme représenté sur la figure 4 ;
- lorsque les deux moteurs internes M2 et M3 sont en panne, les deux moteurs externes M1 et M4 de part et d'autre du fuselage, comme représenté sur la figure 5 ;
- lorsque les deux moteurs externes M1 et M4 sont en panne, les deux moteurs internes M2 et M3 de part et d'autre du fuselage, comme illustré sur la figure 6 ; et
- lorsque le moteur interne M3 d'une première aile C et le moteur externe M1 de la seconde aile B sont en panne, les deux moteurs M2 et M4 non en panne.

En résumé, lorsque les conditions relatives au déclenchement de la fonction de protection sont réalisées et :
- si aucun moteur n'est en panne, tous les moteurs sont commandés à la puissance maximale, comme représenté sur la figure 2. On obtient ainsi une poussée symétrique ;
- si deux moteurs sont en panne, mais ne se trouvent pas sur une même aile B, C, les deux moteurs restants sont commandés à la puissance maximale, comme représenté sur la figure 7. Ceci peut entraîner une légère dissymétrie de poussée ; et
- si deux moteurs sont en panne sur une même aile, la fonction de protection est inhibée. Ceci est le cas lorsqu'uniquement deux moteurs M1 et M2 sont en panne, comme représenté sur la figure 8, ou lorsque trois moteurs M1, M3 et M4 sont en panne, comme représenté sur la figure 9.

Bien entendu, en cas de panne simultanée des quatre moteurs M1 à M4, la question de la commande d'un moteur ne se pose pas.

On notera que le dispositif de protection d'énergie conforme à l'invention peut également s'appliquer à un avion trimoteur (non représenté) comprenant deux moteurs sous voilure et un moteur sur fuselage. Si le moteur sur fuselage tombe en panne, on prévoit la possibilité d'activer la fonction de protection d'énergie sur les deux moteurs sous voilure. Pour ce faire, les moyens d'inhibition dudit dispositif de protection d'énergie sont formés de manière à inhiber l'activation de ladite fonction de protection, uniquement lorsqu'au moins l'un des moteurs sous voilure est en panne.

## Revendications

1. Dispositif de protection d'énergie pour un avion (A) qui est muni d'au moins un moteur (M1, M3) agencé sur chacune de ses ailes (B, C) et d'au moins un moteur supplémentaire (M2, M4), ledit dispositif (1) comportant :
- des moyens de détection (2) pour détecter les pannes desdits moteurs (M1 à M4) ;
- des moyens de commande (3) déclenchables, pour activer, lorsqu'ils sont déclenchés, une fonction de protection consistant à commander automatiquement lesdits moteurs (M1 à M4) pour qu'ils fournissent une poussée maximale ;
- des moyens de déclenchement (6) pour surveiller automatiquement une pluralité de paramètres et pour déclencher automatiquement lesdits moyens de commande (3) lorsque des conditions de déclenchement dépendant desdits paramètres surveillés sont réalisées ; et
- des moyens d'inhibition (8) reliés auxdits moyens de détection (2) et susceptibles d'agir sur lesdits moyens de déclenchement (6) de manière à inhiber l'activation de ladite fonction de protection,
**caractérisé en ce que :**
- lesdits moyens d'inhibition (8) sont formés de manière à inhiber l'activation de ladite fonction de protection, uniquement lorsque tous les moteurs qui sont agencés sur une même aile (B, C) de l'avion (A) sont simultanément en panne ; et
- lesdits moyens de commande (3) sont formés de sorte que, lorsqu'ils sont déclenchés, ils commandent, en fonction du nombre et de la position des moteurs éventuellement en panne, au moins certains des moteurs non en panne, de manière à minimiser une éventuelle dissymétrie de poussée par rapport au fuselage de l'avion (A).

2. Dispositif selon la revendication 1, pour un avion (A) qui est muni de quatre moteurs (M1 à M4) agencés par paires sur ses ailes (B, C), **caractérisé en ce que** lesdits moyens d'inhibition (8) sont formés de manière à inhiber l'activation de ladite fonction de protection, uniquement lorsque deux moteurs qui sont agencés sur une même aile (B, C) de l'avion (A) sont simultanément en panne.

3. Dispositif selon la revendication 2,
**caractérisé en ce que** lesdits moyens de commande (3) sont formés de manière à commander, lorsqu'ils sont déclenchés :
- lorsqu'aucun moteur n'est en panne, tous les quatre moteurs (M1 à M4) ;
- lorsqu'un moteur externe (M1, M4) est en panne, uniquement les deux moteurs internes (M2, M3) de part et d'autre du fuselage ;
- lorsqu'un moteur interne (M2, M3) est en panne, uniquement les deux moteurs externes (M1, M4) de part et d'autre du fuselage ;
- lorsque les deux moteurs externes (M1, M4) sont en panne, les deux moteurs internes (M2, M3) de part et d'autre du fuselage ;
- lorsque les deux moteurs internes (M2, M3) sont en panne, les deux moteurs externes (M1, M4) de part et d'autre du fuselage ; et
- lorsque le moteur interne (M3) d'une première aile (C) et le moteur externe (M1) de la seconde aile (B) sont en panne, les deux moteurs (M2, M4) non en panne.

4. Dispositif selon la revendication 1, pour un avion trimoteur qui est muni d'un moteur agencé sur chacune de ses ailes et d'un moteur supplémentaire agencé sur le fuselage,
**caractérisé en ce que** lesdits moyens d'inhibition sont formés de manière à inhiber l'activation de ladite fonction de protection, uniquement lorsqu'au moins l'un des moteurs qui sont agencés sur les ailes est en panne.

5. Dispositif selon l'une quelconque des revendications précédentes,
**caractérisé en ce que** lesdits moyens de déclenchement (6) sont associés à une pluralité de capteurs (C1, C2, Cn) destinés à mesurer au moins certains des paramètres suivants : l'incidence de l'avion (A), l'assiette longitudinale de l'avion (A), la vitesse de tangage de l'avion (A), la vitesse de l'avion (A) ainsi que son taux de décélération, le nombre de Mach de l'avion (A), la position de becs et de volets de l'avion (A), la hauteur radio-altitude de l'avion (A), la position d'un mini-manche, et des paramètres moteur permettant de détecter une panne moteur.

6. Dispositif selon l'une quelconque des revendications précédentes,
**caractérisé en ce que** lesdits moyens de déclenchement (6) prennent en compte, comme conditions de déclenchement :
- des premières conditions relatives à un besoin de déclenchement ; et
- des secondes conditions relatives à une autorisation de déclenchement, qui doivent être simultanément vérifiées pour engendrer le déclenchement.

7. Dispositif selon la revendication 6,
**caractérisé en ce que** lesdites premières conditions sont vérifiées, si au moins l'une des situations suivantes est vérifiée :
- l'incidence de l'avion (A) est supérieure ou égale à une première valeur d'incidence et une condition d'énergie basse est active depuis une durée prédéterminée ;
- l'incidence de l'avion (A) est supérieure ou égale à une seconde valeur d'incidence prédéterminée ;
- un moyen de protection d'incidence est engagé et un manche de commande de l'avion (A) est dans une position proche de la butée à cabrer ;
- l'assiette de l'avion (A) est supérieure à une valeur d'assiette prédéterminée et le manche de commande est dans une position proche de la butée à cabrer.

8. Dispositif selon l'une des revendications 6 et 7,
**caractérisé en ce que** lesdites secondes conditions sont vérifiées, si l'ensemble des situations suivantes sont vérifiées simultanément :
- la hauteur de l'avion (A) par rapport au sol est supérieure à une valeur de hauteur prédéterminée, lors de l'atterrissage ;
- le nombre de Mach de l'avion (A) est inférieur à une valeur prédéterminée de nombre de Mach ; et
- une pluralité de systèmes particuliers de l'avion (A) sont valides.

9. Dispositif selon l'une quelconque des revendications précédentes,
**caractérisé en ce qu'**il comporte, de plus, au moins un moyen (9) qui est susceptible d'être actionné par un opérateur et qui est formé de manière à désactiver ladite fonction de protection lorsqu'il est actionné.

10. Dispositif selon l'une quelconque des revendications précédentes,
**caractérisé en ce que** lesdits moyens de commande (6) sont formés de manière à commander, lorsque la fonction de protection est activée, au moins certains des moteurs non en panne de sorte que ces derniers fournissent chacun une poussée maximale pour un décollage ou une remise des gaz.

11. Avion,
**caractérisé en ce qu'**il comporte un dispositif (1) tel que celui spécifié sous l'une quelconque des revendications 1 à 10.

## Claims

1. An energy protecting device for an aircraft (A) which has at least one engine (M1, M3) arranged on each of its wings (B, C) and at least one additional engine (M2, M4), said device (1) comprising:
- detecting means (2) for detecting the failures of said engines (M1 to M4);
- triggerable control means (3), for activating, when they are triggered, a protective function consisting in automatically controlling said engines (M1 to M4) in order that they provide maximum thrust;
- triggering means (6) to automatically monitor a plurality of parameters and to automatically trigger said control means (3) when triggering conditions depending on said monitored parameters are fulfilled; and
- inhibiting means (8) connected to said detesting means (2) and able to act upon said triggering means (6) in order to inhibit the activation of said protective function
**characterized in that:**
- said inhibiting means (8) are produced in such a way as to inhibit the activation of said protective function, solely when all of the engines which are arranged on a common wing (B, C) of the aircraft (A) have simultaneously failed; and
- said control means (3) are produced in such a way that, when they are triggered, they control, depending on the number and position of the possibly failed engines, at least some of the engines that have not failed, in such a way as to minimize a possible thrust unbalance with respect to the fuselage of the aircraft (A).

2. The device as claimed in claim 1, for an aircraft (A) which is provided with four engines (M1 to M4) arranged in pairs on its wings (B, C), **characterized in that** said inhibiting means (8) are produced in such a way as to inhibit the activation of said protective function, solely when two engines which are arranged on a common wing (B, C) of the aircraft (A) have simultaneously failed.

3. The device as claimed in claim 2, **characterized in that** said control means (3) are produced in such a way as to control, when they are triggered:
- when no engine has failed, all four engines (M1 to M4);
- when an outer engine (M1, M4) has failed, solely the two inner engines (M2, M3) on either side of the fuselage;
- when an inner engine (M2, M3) has failed, solely the two outer engines (M1, M4) on either side of the fuselage;
- when the two outer engines (M1, M4) have failed, the two inner engines (M2, M3) on either side of the fuselage;
- when the two inner engines (M2, M3) have failed, the two outer engines (M1, M4) on either side of the fuselage; and
- when the inner engine (M3) of a first wing (C) and the outer engine (M1) of the second wing (B) have failed, the two engines (M2, M4) that have not failed.

4. The device as claimed in claim 1, for a three-engined aircraft which is provided with one engine arranged on each of its wings and with an additional engine arranged on the fuselage, **characterized in that** said inhibiting means are produced such that they inhibit the activation of said protective function, solely when at least one of the engines which are arranged on the wings has failed.

5. The device as claimed in any one of the preceding claims, **characterized in that** said triggering means (6) are associated with a plurality of sensors (C1, C2, Cn) for measuring at least some of the following parameters: the incidence of the aircraft (A), the longitudinal attitude of the aircraft (A), the pitch speed of the aircraft (A), the speed of the aircraft (A) and its deceleration rate, the Mach number of the aircraft (A), the position of the slats and flaps of the aircraft (A), the radio-altitude height of the aircraft (A), the position of a joystick and engine parameters making it possible to detect an engine failure.

6. The device as claimed in any one of the preceding claims, **characterized in that** said triggering means (6) take into account, as triggering conditions:
- first conditions relating to a triggering need; and
- second conditions relating to a triggering authorization,
which must be fulfilled simultaneously in order to generate the triggering.

7. The device as claimed in claim 6, **characterized in that** said first conditions are fulfilled if at least one of the following situations is verified:
- the incidence of the aircraft (A) is greater than or equal to a first incidence value and a low energy condition has been active for a predetermined duration;
- the incidence of the aircraft (A) is greater than or equal to a second predetermined incidence value;
- an incidence protecting means is engaged and a control member of the aircraft (A) is in a position close to the nose-up stop;
- the attitude of the aircraft (A) is greater than a predetermined attitude value and the control member is in a position close to the nose-up stop.

8. The device as claimed in one of claims 6 and 7, **characterized in that** said second conditions are fulfilled if all of the following situations are verified simultaneously:
- the height of the aircraft (A) with respect to the ground is greater than a predetermined height value at the time of the landing;
- the Mach number of the aircraft (A) is less than a predetermined Mach number value; and
- a plurality of particular systems of the aircraft (A) are valid.

9. The device as claimed in any one of the preceding claims, **characterized in that** it furthermore comprises at least one means (9) which is able to be operated by an operator and which is produced in such a way as to deactivate said protective function when it is operated.

10. The device as claimed in any one of the preceding claims, **characterized in that** said control means (6) are produced in such a way as to control, when the protective function is activated, at least some of the engines that have not failed such that the latter each provide maximum thrust for a takeoff or for a go-around.

11. An aircraft, **characterized in that** it comprises a device (1) as claimed in any one of claims 1 to 10.

## Patentansprüche

1. Energieschutzvorrichtung für ein Flugzeug (A), das mit jeweils mindestens einem Motor (M1, M3) an seinen Flügeln (B, C) und mit mindestens einem zusätzlichen Motor (M2, M4) versehen ist, wobei die Vorrichtung (1) Folgendes umfasst:
- Detektionsmittel (2) zur Detektion der Störungen der Motoren (M1 bis M4),
- Auslösbare Steuermittel (3), um im Auslösefall eine Schutzfunktion zu aktivieren, die darin besteht, die Motoren (M1 bis M4) automatisch so anzusteuern, dass sie Maximalschub liefern,
- Auslösemittel (6) zur automatischen Überwachung einer Vielzahl von Parametern und zum automatischen Auslösen der Steuermittel (3), wenn die von den überwachten Parametern abhängigen Auslösebedingungen erfüllt sind und
- Hemmmittel (8), die mit den Detektionsmitteln (2) verbunden sind und die auf die Auslösemittel (6) derart einwirken können, dass sie die Aktivierung der Schutzfunktion hemmen,
**dadurch gekennzeichnet, dass:**
- die Hemmmittel (8) derart gestaltet sind, dass sie die Aktivierung der Schutzfunktion ausschließlich hemmen, wenn alle an ein und demselben Flügel (B, C) des Flugzeugs (A) angeordneten Motoren gleichzeitig fehlerhaft sind und
- die Steuermittel (3) so gestaltet sind, dass sie im Auslösefall abhängig von der Anzahl und der Position der gegebenenfalls fehlerhaften Motoren mindestens einige der nicht fehlerhaften Motoren so ansteuern, dass eine mögliche Ungleichmäßigkeit des Schubs bezogen auf den Rumpf des Flugzeugs (A) minimiert wird.

2. Vorrichtung nach Anspruch 1 für ein Flugzeug (A), das mit vier paarweise an seinen Flügeln (B, C) angeordneten Motoren (M1 bis M4) versehen ist,
**dadurch gekennzeichnet, dass** die Hemmmittel (8) derart gestaltet sind, dass sie die Aktivierung der Schutzfunktion ausschließlich hemmen, wenn zwei an ein und demselben Flügel (B, C) des Flugzeugs (A) angeordnete Motoren gleichzeitig fehlerhaft sind.

3. Vorrichtung nach Anspruch 2,
**dadurch gekennzeichnet, dass** die Steuermittel (3) derart gestaltet sind, dass sie im Auslösefall:
- alle vier Motoren (M1 bis M4) ansteuern, wenn kein Motor fehlerhaft ist,
- ausschließlich die beiden Innenmotoren (M2, M3) beiderseits des Rumpfes ansteuern, wenn ein Außenmotor (M1, M4) fehlerhaft ist,
- ausschließlich die beiden Außenmotoren (M1, M4) beiderseits des Rumpfes ansteuern, wenn ein Innenmotor (M2, M3) fehlerhaft ist,
- die beiden Innenmotoren (M2, M3) beiderseits des Rumpfes ansteuern, wenn die beiden Außenmotoren (M1, M4) fehlerhaft sind,
- die beiden Außenmotoren (M1, M4) beiderseits des Rumpfes ansteuern, wenn die beiden Innenmotoren (M2, M3) fehlerhaft sind und
- die beiden nicht fehlerhaften Motoren (M2, M4) ansteuern, wenn der Innenmotor (M3) eines ersten Flügels (C) und der Außenmotor (M1) des zweiten Flügels (B) fehlerhaft sind.

4. Vorrichtung nach Anspruch 1 für ein dreimotoriges Flugzeug, das mit einem Motor an jedem seiner Flügel und mit einem zusätzlichen, am Rumpf angeordneten Motor versehen ist,
**dadurch gekennzeichnet, dass** die Hemmmittel (8) derart gestaltet sind, dass sie die Aktivierung der Schutzfunktion ausschließlich hemmen, wenn mindestens einer der an den Flügeln angeordneten Motoren fehlerhaft ist.

5. Vorrichtung nach einem der vorhergehenden Ansprüche,
**dadurch gekennzeichnet, dass** die Auslösemittel (6) einer Vielzahl von Messfühlern (C1, C2, Cn) zugeordnet sind, die dazu vorgesehen sind, wenigstens einige der folgenden Parameter zu messen: den Anstellwinkel des Flugzeugs (A), den Längsneigungswinkel des Flugzeugs (A), die Nickgeschwindigkeit des Flugzeugs (A), die Geschwindigkeit des Flugzeugs (A) sowie seine Verzögerungsrate, die Mach-Zahl des Flugzeugs (A), die Stellung der Nasenklappen und der Flügelklappen des Flugzeugs (A), die Radarhöhe des Flugzeugs (A), die Stellung eines Mini-Steuerknüppels und Motorkenngrößen, die es ermöglichen, einen Motorausfall zu detektieren.

6. Vorrichtung nach einem der vorhergehenden Ansprüche,
**dadurch gekennzeichnet, dass** die Auslösemittel (6) als Auslösebedingungen:
- erste Bedingungen bezogen auf einen Auslöse-Bedarf und
- zweite Bedingungen bezogen auf eine Auslöse-Freigabe berücksichtigen, die gleichzeitig erfüllt sein müssen, um das Auslösen zu erzeugen.

7. Vorrichtung nach Anspruch 6,
**dadurch gekennzeichnet, dass** die ersten Bedingungen erfüllt sind, wenn mindestens eine der folgenden Situationen zutrifft:
- der Anstellwinkel des Flugzeugs (A) ist größer oder gleich einem ersten Anstellwinkelwert und ein Niedrigenergiezustand ist während einer vorgegebenen Dauer aktiv,
- der Anstellwinkel des Flugzeugs (A) ist größer oder gleich einem zweiten vorgegebenen Anstellwinkelwert,
- ein Anstellwinkelschutzmittel ist eingeschaltet und ein Steuerknüppel des Flugzeugs (A) ist in einer Stellung nahe dem Anschlag für "Nose up"-Trimmung,
- die Trimmung des Flugzeugs (A) ist größer als ein vorgegebener Trimmwert und der Steuerknüppel ist in einer Stellung nahe dem Anschlag für "Nose up"-Trimmung.

8. Vorrichtung nach Anspruch 6 oder 7,
**dadurch gekennzeichnet, dass** die zweiten Bedingungen erfüllt sind, wenn die Gesamtheit der folgenden Situationen gleichzeitig zutrifft:
- die Höhe des Flugzeugs (A) gegenüber dem Boden ist bei der Landung größer als ein vorgegebener Höhenwert,
- die Mach-Zahl des Flugzeugs (A) ist kleiner als ein vorgegebener Machzahlwert und
- eine Vielzahl von besonderen Systemen des Flugzeugs (A) sind bestätigt.

9. Vorrichtung nach einem der vorhergehenden Ansprüche,
**dadurch gekennzeichnet, dass** sie außerdem ein Mittel (9) umfasst, das von einer Bedienperson betätigbar ist und das derart gestaltet ist, dass es bei seiner Betätigung die Schutzfunktion deaktiviert.

10. Vorrichtung nach einem der vorhergehenden Ansprüche,
**dadurch gekennzeichnet, dass** die Steuermittel (6), wenn die Schutzfunktion aktiviert ist, mindestens bestimmte der nicht fehlerhaften Motoren ansteuern, so dass Letztere jeweils einen maximalen Schub für einen Start oder einen Durchstartvorgang liefern.

11. Flugzeug,
**dadurch gekennzeichnet, dass** es eine Vorrichtung (1) wie die unter einem der Ansprüche 1 bis 10 spezifizierte aufweist.
